# EUROPEAN PATENT APPLICATION

(11) **EP 2 941 964 A1**
(43) Date of publication of application: **11.11.2015**
(21) Application number: 14075029.0
(22) Date of filing: 08.05.2014
(51) Int. Cl.: A23G 3/22

(54) **Apparatus for enrobing articles with layers of chocolate mass**

(71) Applicant: Aasted ApS, 3520 Farum (DK)
(72) Inventor: Holmud, Dennis, 2860 Søborg (DK)
(74) Representative: Heiden, Finn

(57) **Abstract**

Apparatus (1) for enrobing articles (3) with layers of chocolate or chocolate-like mass comprising a conveyor grid (2) extending through the apparatus (1) and adapted for carrying the articles (3) continuously through a transversely extending enrobing curtain (4). A transversely extending flow pan (5) is arranged above the grid (2) and from which the mass is poured as the curtain (4) onto the articles (3). A reservoir tank (6) being open at the top (7) is arranged below the conveyer grid (2) adapted for collecting residual mass (8). A supply conduit (9) for tempered chocolate mass extending to above the flow pan (5) is connected with a tubular depositing means (10) extending transversely above the flow pan (5) having openings (11) at the underside for depositing of mass to the flow pan (5). A screen element (23) is arranged inside the tubular depositing means (10) covering the complete passage for the mass. The mass flows radially out through the screen 23 and particles and inclusions are being maintained inside the tubular screen 23 and are flushed on to the other end 31 of the tubular screen 23. Undesirable inclusions and particles are thereby filtered out of the mass before the mass enters the curtain and enrobes the articles.

## Description

The present invention relates to apparatus for enrobing articles with layers of chocolate or chocolate-like mass.

Such apparatus has a conveyor grid extending through the enrober apparatus adapted for carrying the articles continuously through a transversely extending enrobing curtain. A transversely extending flow pan is arranged above the grid and therefrom the mass is poured as the curtain onto the articles. A reservoir tank being open at the top is arranged below the conveyer grid adapted for collecting residual mass. A supply conduit for tempered chocolate mass is extending to above the flow pan and is connected with a tube-formed depositing means extending transversely above the flow pan having openings at the underside for depositing of mass to the flow pan. The chocolate-like mass is brought to a tempered, liquid state before being pumped to the enrobing apparatus.

During the enrobing process is basically consumed 5-20%, typically 10% only of the chocolate mass feed in the curtains of the enrober onto the articles. The rest of the chocolate mass is residue mass being returned through the grid conveyor or wire mesh to the mass in the stirred reservoir tank. The residue mass is mixed with freshly tempered mass before being supplied to the flow pan at the top. However, the residue mass may also be returned to the holding tank before being retempered and supplied to the enrober again. A bottoming enrobing process may be performed in the enrobing apparatus as well.

In the reservoir tank, inclusions or particles in the mass may build up. It could be small particles in the mass thickening more and more with chocolate particles due to the repeated circulation through the enrober, or it could be inclusions such as nut pieces, raisins etc. The inclusions or particles could be bigger than the rest mixed into the mass, or could be unwanted particles from the production of the chocolate mass. Also the materials of the articles themselves may be loosened at the conveyor grid and fall into the reservoir tank so that they are returned to the top pan. Especially when the articles are of the types such as müslibars, pieces of nuts are much likely to reenter the enrobing process by being returned to the flow pan at the top. Such pieces may adversely affect the enrobing curtain and consequently the enrobing quality of a random number of enrobed articles.

Common for these inclusions and particles is, that they affect both the visual impression of the enrobed articles as well as the taste and mouth feel thereof when eating the articles. Also separate air bubbles in the enrobed chocolate layers are undesirable when not being part of the intended.

EP0804882A1 describes an enrobing apparatus by which a screen element is arranged below the conveyor grid and above the reservoir tank. With this solution the mass have already passed over the articles on the grid before it comes to the screen, so that only the residue mass passes through the screen being filtered.

The problems to be solved with the prior art enrobing apparatus are to avoid undesirable particles and inclusions in the mass being accumulated in the tubular depositing means and also to avoid that these are being transferred to the enrobed layers.

With the inventive solution, a screen element is arranged inside the tubular depositing means covering the complete passage for the mass. Undesirable inclusions and particles are thereby filtered out of the mass before the mass enters the curtain and enrobes the articles. The particles are simply maintained by the screen and does not contaminate the enrobed layers. Neither does the undesirable particles and inclusions give rise to failures in the enrobing curtain of mass. The curtain is maintained without differences in the thickness, which could be caused by particles maintained or accumulated at the tubular depositing means.

When the screen element is tubular and is arranged extending concentrically in the tubular depositing means of which one end is connected with the supply conduit, the filter is self-cleaning. The mass flow radially out through the screen and particles and inclusions are being maintained inside the tubular screen flushed on to the other end of the tubular screen.

A secondary conduit having a closure valve leading away from the tubular depositing means collects the maintained particles when the valve is closed during production. Opening the valve the collected particles can easily be deposited into a bucket or the like and removed from the production. Typically the valve is controlled to open and close intermittently, such as with a certain frequency.

When the secondary conduit extends to the reservoir tank the particles may be collected in the tank when it is preferred by keeping the valve open. This could be during production when required or for example when production is shut down and the apparatus is to be cleaned and serviced.

The tubular screen is easily dismantled and refitted when the ends of the tubular depositing means have flanges into which the ends of the tubular screen element fits.

The opening width of the meshes of the tube-formed screen is advantageously 2-4 mm.

The upper part of the concentrically arranged tubular screen element is closed off when undesirable air bubbles are to be removed from the chocolate mass. The air bubbles rises to the top of the flow of the chocolate mass and are maintained by the closed upper part of the screen element. From the upper part of the tubular screen the air is easily removed.

When it is required to enrobe the undersides of the articles, a supply conduit for tempered chocolate mass is connected with a further tubular depositing means arranged below the conveyor grid, and a tubular screen element is arranged concentrically inside it.

The invention is described further in detail in relation to the drawing, at which;
Fig. 1 discloses the inventive enrober apparatus, seen from the side,
Fig. 2 discloses the apparatus of figure 1, seen from the end,
Fig. 3 discloses schematically the apparatus connected with a chocolate holding tank and a tempering machine,
Fig. 4 discloses the tubular depositing means with an inner tubular screen element of the inventive apparatus, seen in longitudinal section,
Fig. 5 discloses in perspective the inventive tubular screen element, and

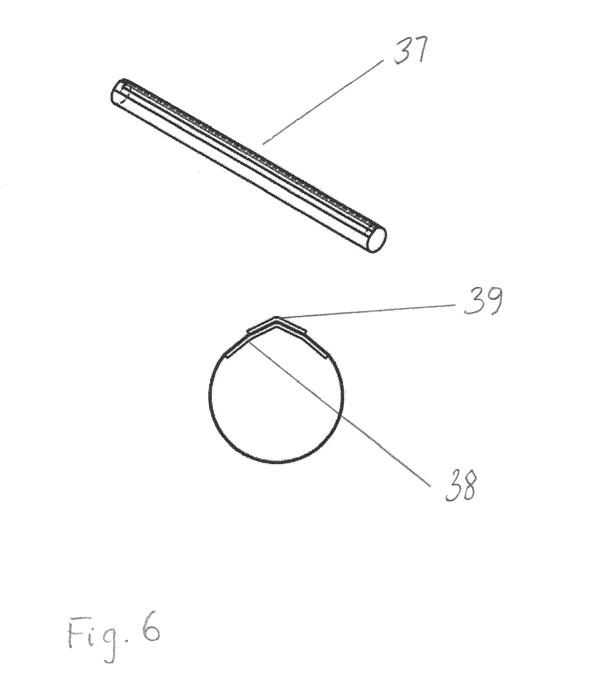

Fig. 6 another embodiment of the inventive tubular screen element.

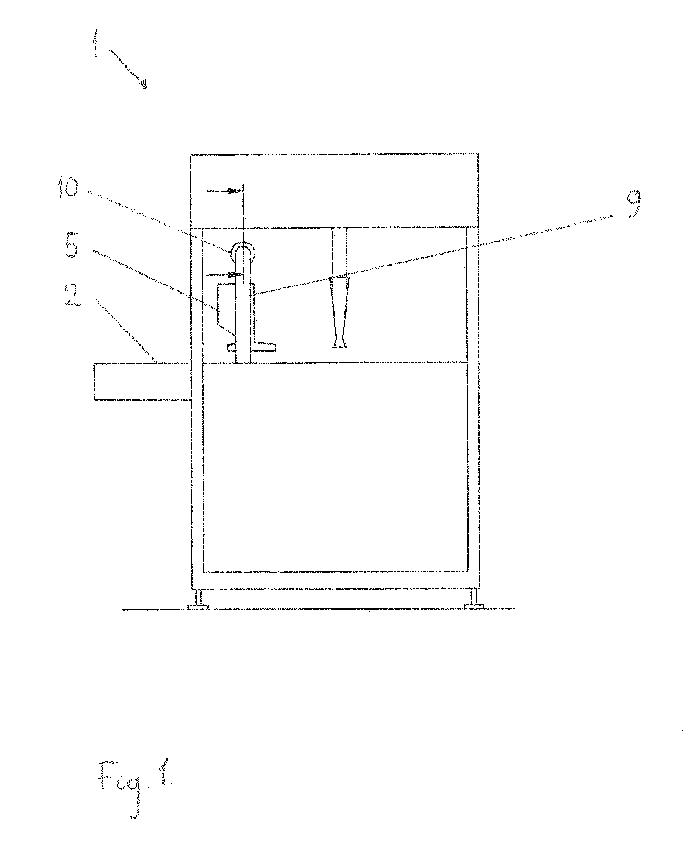

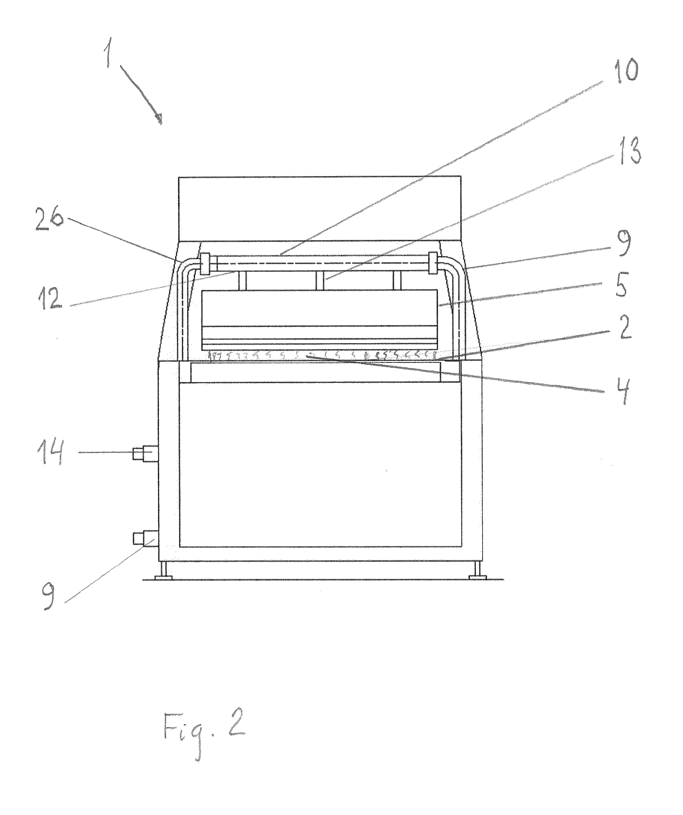

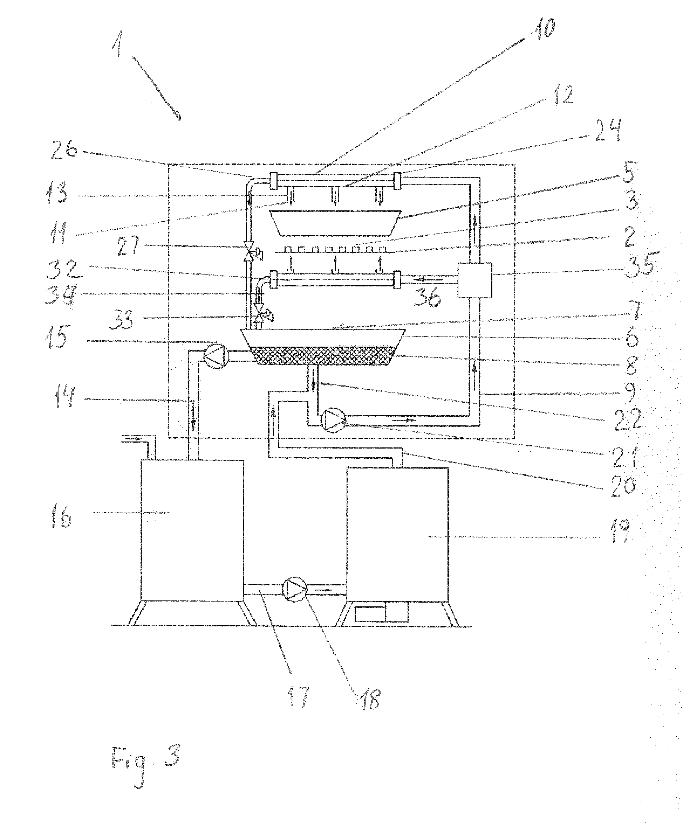

The enrobing apparatus 1 disclosed in figures 1, 2 and 3 has a conveyor grid 2 extending through the apparatus 1 adapted for receiving and carrying the articles 3 continuously through a transversely extending enrobing curtain 4 of the apparatus 1. A transversely extending flow pan 5 is arranged above the conveyor grid 2 and is pouring the mass as the curtain 4. A reservoir tank 6 being open at the top 7 is arranged below the conveyor grid 2. The residual mass 8 not being enrobed onto the articles 3 is collected into the tank 6. At figure 3 is schematically disclosed the internal connections and building-wise of the enrobing apparatus of figures 1 and 2, that is relevant for explaining the inventive solution.

A supply conduit 9 for tempered chocolate mass is extending to above the flow pan 5 and being connected with a tubular depositing means 10 extending transversely above the flow pan 5. The tubular depositing means 10 has openings 11 at the underside 12 for depositing of mass to the flow pan 5. The openings 11 are typically arranged via tube parts 13.

A conduit 14 with a pump 15 connects the tank 6 with a holding tank 16, so that chocolate mass can be returned to the tank, when necessary for renewed heating up of crystals in the mass. A conduit 17 with a pump 18 connects the holding tank 16 with the tempering machine 19. From the tempering machine 19 a conduit 20 brings tempered chocolate to the supply conduit 9 in the enrobing apparatus 1. A further conduit 22 mixes up chocolate from the reservoir tank into the freshly tempered chocolate.

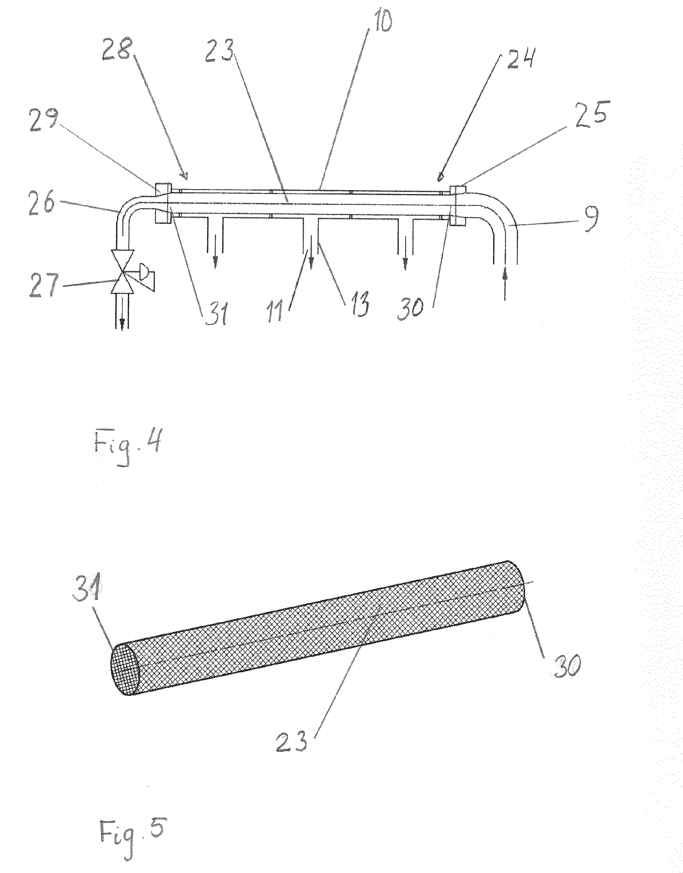

According to the inventive solution, a screen element 23 is arranged inside the tubular depositing means 10. The screen element may have different configurations such as planar or round. Decisive is that the screen element covers the complete passage for the mass through the depositing means 10 so that particles in the mass are maintained at the screen. At the disclosed embodiment the screen element 23 is tubular and is arranged concentrically inside the depositing tube 10, i.e. figure 4. One end 24 of the depositing tube 10 is connected to the supply conduit 9 vis a flange connection 25. A secondary conduit 26 having a valve 27 is connected to the other end 28 of the depositing tube 10 via a further flange connection 29. The secondary conduit 26 is disclosed as extending to the holding tank 6, but may also extend to a wastage container not disclosed.

The tubular screen element 23 is arranged with each of its ends 30, 31 into the ends 24, 28 respectively of the depositing tube 10, so that the screen element 23 is extending concentrically through all the length of the depositing tube 10. The ends may be tightened with gaskets or may fit tightly.

The screen element 23 covers the complete passage for the mass and is self-cleaning. The mass flow radially out through the screen 23 and particles and inclusions are being maintained inside the tubular screen 23 and is flushed on to the other end 31 of the tubular screen 23. Undesirable inclusions and particles are thereby filtered out of the mass before the mass enters the curtain and enrobes the articles. The particles are simply maintained by the screen 23 and does not contaminate the enrobed layers. Neither does the undesirable particles and inclusions give rise to failures in the enrobing curtain 4 of mass. The curtain 4 is maintained without differences in the thickness, which could be caused by particles maintained or accumulated at the tubular depositing means.

The secondary conduit 26 leading away from the tubular depositing means collects the maintained particles when the valve 27 is closed during production. Opening the valve 27, the collected particles can easily be deposited into a bucket or the like and removed from the production or be returned to the collecting reservoir tank 6 without having affected the production. Typically the valve 27 is controlled to open and close intermittently, such as with a certain frequency.

Optionally a further tubular depositing means 32 according to the invention may be arranged below the conveyor grid 2 for enrobing the undersides of the articles. A valve 33 then opens for chocolate with maintained particles to flow via a conduit 34 to the reservoir tank 6. A branch connection 35 with a valve then supplies the tempered chocolate from the conduit 9 and via a conduit 36 to the further depositing means 32.

With another embodiment of the tubular screen element 37 the upper part of the concentrically arranged tubular screen element is closed off. It could be done with longitudinally extending profiled plates 38, 39 fixed inside and outside the screen element 37, respectively.

This embodiment is especially advantageous for removing undesirable air bubbles from the chocolate mass. The air bubbles rises to the top of the flow of the chocolate mass and are maintained by the closed upper parts 38, 39 of the screen element. From the upper parts 38, 39 of the tubular screen 37 the air is easily removed, for example when opening the valve 27 at the outlet conduit 26.
- 1:: Apparatus for enrobing
- 2:: conveyor grid
- 3:: articles
- 4:: chocolate curtain
- 5:: flow pan
- 6:: reservoir tank
- 7:: top of tank
- 8:: residual mass
- 9:: supply conduit
- 10:: tubular depositing means
- 11:: openings
- 12:: underside of tubular depositor
- 13:: tube parts
- 14:: return conduit
- 15:: pump
- 16:: holding tank
- 17:: conduit
- 18:: pump
- 19:: tempering machine
- 20:: conduit
- 21:: circulation pump
- 22:: conduit
- 23:: tubular screen element
- 24:: one end of the depositing tube
- 25:: flange connection
- 26:: secondary conduit
- 27:: valve
- 28:: other end of depositing tube
- 29:: flange connection
- 30:: end of tubular screen element
- 31:: end of tubular screen element
- 32:: lower tubular depositing means
- 33:: valve
- 34:: conduit
- 35:: branch connection
- 36:: conduit
- 37:: another embodiment of tubular screen element
- 38:: inner plate element
- 39:: outer plate element

## Claims

1. Apparatus (1) for enrobing articles (3) with layers of chocolate or chocolate-like mass,
comprising
a conveyor grid (2) extending through the enrober (1) and adapted for carrying the articles (3) continuously through a transversely extending enrobing curtain (4),
a transversely extending flow pan (5) arranged above the grid (2) and from which the mass is poured as the curtain (4) onto the articles (3),
a reservoir tank (6) being open at the top (7) and arranged below the conveyer grid (2) adapted for collecting residual mass (8),
a supply conduit (9) for tempered chocolate mass extending to above the flow pan (5) and being connected with a tubular depositing means (10) extending transversely above the flow pan (5) and having openings (11) at the underside for depositing of mass to the flow pan (5),
**characterised in,**
**that** a screen element (23) is arranged inside the tubular depositing means (10) covering the complete passage for the mass.

2. Apparatus according to claim 1, **characterised in, that** the screen element (23) is tubular and is arranged extending concentrically in the tubular depositing means (10) of which one end (24) is connected with the supply conduit (9).

3. Apparatus according to claim 1, **characterised in, that** a secondary conduit (26) having a closure valve (27) leads away from the other end (28) of the tubular depositing means (10).

4. Apparatus according to claim 1, **characterised in, that** the secondary conduit (26) extends to the reservoir tank (6).

5. Apparatus according to claim 1, **characterised in, that** the ends (24, 28) of the tubular depositing means (10) have flanges (25, 29) into which the ends (30, 31) of the inner tubular screen element (23) fits.

6. Apparatus according to claim 1, **characterised in, that** the opening width of the meshes of the tubular screen is 2-4 mm.

7. Apparatus according to claim 1, **characterised in, that** the upper part (38, 39) of the concentrically arranged tubular screen element (37) is closed off.

8. Apparatus according to claim 1, **characterised in, that** a supply conduit (36) for tempered chocolate mass is connected with a further tubular depositing means (32) arranged below the conveyor grid (2), and that a tubular screen element (10) is arranged concentrically inside it.
